# EUROPÄISCHE PATENTANMELDUNG

(11) **EP 1 262 672 A2**
(43) Veröffentlichungstag der Anmeldung: **04.12.2002**
(21) Anmeldenummer: 01129685.2
(22) Anmeldetag: 13.12.2001
(51) Int. Cl.: F16C 27/06

(54) **Wellenlager**

(30) Priorität: 28.05.2001 DE 10126016
(71) Anmelder: Carl Freudenberg KG, 69469 Weinheim (DE)
(72) Erfinder: Schmidt, Frank, 79379 Müllheim-Vögisheim (DE); Schütz, Michael, 79418 Schliengen (DE); Buck, Ralf, Dr., 79395 Neuenburg (DE)

(57) **Zusammenfassung**

Wellenlager, umfassend ein Wälzlager (1) mit einem Außenring (2), der außenumfangsseitig von einem Haltering (3) mit radialem Abstand umschlossen ist, wobei in dem durch den Abstand gebildeten Spalt (4) zumindest ein in axialer und radialer Richtung elastisch nachgiebiger erster Federkörper (5) angeordnet ist. Der Außenring (2) ist relativ unverdrehbar mit einem Schwingungstilger (6) verbunden.

## Beschreibung

Die Erfindung betrifft ein Wellenlager, umfassend ein Wälzlager mit einem Außenring, der außenumfangsseitig von einem Haltering mit radialem Abstand umschlossen ist, wobei in dem durch den Abstand gebildeten Spalt zumindest ein in axialer und radialer Richtung elastisch nachgiebiger erster Federkörper angeordnet ist.

### Stand der Technik

Ein solches Wellenlager ist aus der DE 34 46 518 A1 bekannt. Der Haltering des vorbekannten Wellenlagers ist seinerseits außenumfangsseitig von einem weiteren Außenring mit radialem Abstand umschlossen, wobei der durch den Abstand gebildete Spalt zumindest teilweise mit Elastomer ausgefüllt ist. Die Aufgabe, die durch das vorbekannte Wellenlager gelöst werden soll, wird darin gesehen, dass eine Geräuschübertragung auf das mit dem Wellenlager verbundene Bauteil unterdrückt werden soll. Dazu ist es vorgesehen, dass der Haltering durch seine radiale Anordnung zwischen dem ersten Federkörper und dem Elastomer bei richtiger Wahl und Dimensionierung der Werkstoffe Schwingbewegungen ausführen kann, die den Bewegungen der gelagerten Welle entgegenwirken. Dabei ist allerdings zu beachten, dass für jeden Anwendungsfall spezielle Werkstoffe neu ausgewählt und dimensioniert werden müssen. Nur so kann das vorbekannte Wellenlager an unterschiedliche schwingungstechnische Gegebenheiten der jeweiligen Anwendungsfälle angepasst werden.

### Darstellung der Erfindung

Der Erfindung liegt die Aufgabe zugrunde, ein Wellenlager der vorbekannten Art derart weiterzuentwickeln, dass die Gebrauchseigenschaften des Wellenlagers einfacher an die schwingungstechnischen Gegebenheiten des jeweiligen Anwendungsfalles angepasst werden können.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass der Außenring relativ unverdrehbar mit einem Schwingungstilger verbunden ist. Hierbei ist von Vorteil, dass das erfindungsgemäße Wellenlager nach dem Baukastenprinzip montiert werden kann, wobei an den jeweiligen Anwendungsfall angepasste Schwingungstilger an den Außenring des Wälzlagers anflanschbar sind. Durch eine solche Ausgestaltung besteht prinzipiell die Möglichkeit, bei ansonsten im Wesentlichen unveränderten Bauteilen ausschließlich Veränderungen am Schwingungstilger vorzunehmen und dadurch die gewünschten Gebrauchseigenschaften zu erlangen.

Der Schwingungstilger kann einen Tragkörper, einen zweiten Federkörper und eine im Wesentlichen nur in radialer Richtung schwingfähige Schwungmasse aufweisen. Im Gegensatz zu Drehschwingungstilgern, die vorgesehen sind, Drehungleichförmigkeiten einer Verbrennungskraftmaschine in einem Riementrieb zu reduzieren, tilgt die nur in radialer Richtung schwingfähige Schwungmasse radial gerichtete Schwingungen, die beispielsweise durch Unwuchten der im Wälzlager gelagerten Welle verursacht werden, bzw. Biegeschwingungen von Antriebswellen, die durch hohes Drehmoment bei Krafteinleitung erzeugt werden.

Als besonders vorteilhaft für die axiale und radiale Verlagerung des Wälzlagers zum Haltering und die Schwingungstilgung durch den Schwingungstilger hat es sich erwiesen, wenn der erste und/oder der zweite Federkörper aus einem elastomeren Werkstoff bestehen.

Nach einer ersten Ausgestaltung kann der Schwingungstilger eine separat erzeugte, vormontierbare Einheit bilden, die am Außenring festgelegt ist. Hierbei ist von Vorteil, dass der Schwingungstilger mit handelsüblichen Kardanwellenlagern nach dem Baukastenprinzip kombinierbar ist, wobei das dann entstandene Wellenlager, im Gegensatz zu handelsüblichen Kardanwellenlagern, wesentlich verbesserte Gebrauchseigenschaften aufweist. Durch die Schwingungstilgung in radialer Richtung werden Ermüdungsbrüche der abgestützten Welle und/oder eine Beschädigung/Zerstörung des Wälzlagers vemieden.

Nach einer anderen Ausgestaltung kann der Tragkörper des Schwingungstilgers durch den Außenring des Wälzlagers gebildet sein. Der zweite Federkörper kann dann beispielsweise einstückig ineinander übergehend und materialeinheitlich mit dem ersten Federkörper ausgebildet sein und aus elastomerem Werkstoff bestehen. Der Schwingungstilger bildet in einem solchen Fall einen integralen Bestandteil des Wellenlagers, wobei das Wellenlager insgesamt einen teilearmen Aufbau aufweist und auch durch die einstückig ineinander übergehende und materialeinheitliche Ausgestaltung der beiden Federkörper einfach und kostengünstig herstellbar ist.

Die Schwungmasse kann durch einen Stützkörper und eine zerstörungsfrei lösbar und austauschbar mit dem Stützkörper verbundene Trägheitsmasse gebildet sein. Die Tilgercharakteristik des Schwingungstilgers kann dadurch dem jeweiligen Anwendungsfall besonders gut angepasst werden. Eine lösbare Verbindung zwischen Stützkörper und Trägheitsmasse kann beispielsweise durch eine Verschraubung gebildet sein, wobei die verwendeten Schrauben einen Bestandteil der Trägheitsmasse bilden.

Bevorzugt findet das erfindungsgemäße Wellenlager als Kardanwellenlager mit -tilger Verwendung.

### Kurzbeschreibung der Zeichnung

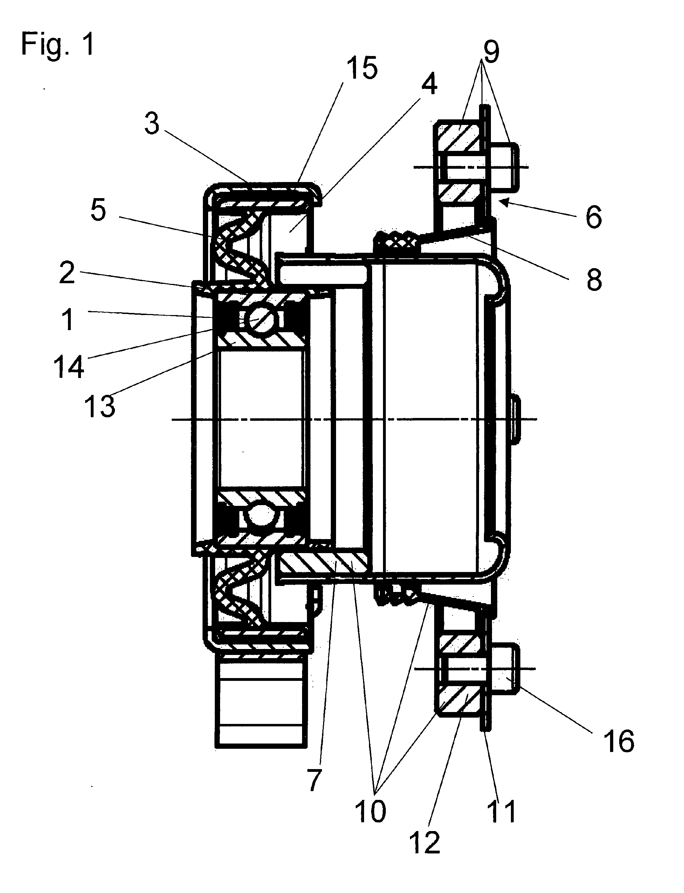

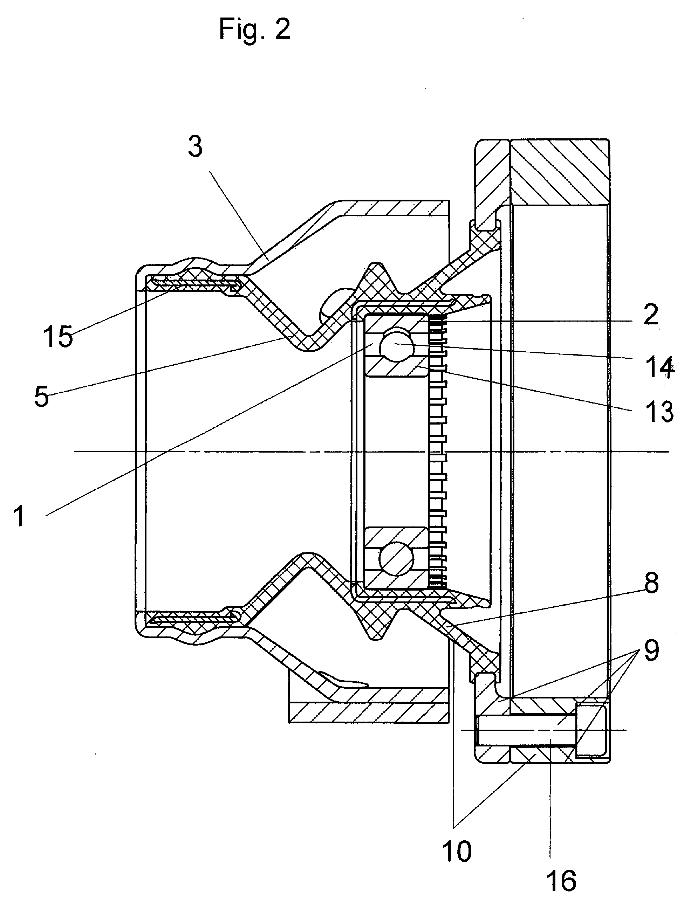

Zwei Ausführungsbeispiele des erfindungsgemäßen Wellenlagers werden nachfolgend anhand der Figuren 1 und 2 näher erläutert. Diese zeigen jeweils in schematischer Darstellung:
- Figur 1: Ein erstes Ausführungsbeispiel, bei dem der Schwingungstilger als separat erzeugte, vormontierbare Einheit ausgebildet und am Außenring des Wälzlagers festgelegt ist,
- Figur 2: ein zweites Ausführungsbeispiel, bei dem der Tragkörper durch den Außenring gebildet ist und die beiden Federkörper einstückig und materialeinheitlich ausgeführt sind.

### Ausführung der Erfindung

In den Figuren 1 und 2 ist jeweils ein Ausführungsbeispiel eines erfindungsgemäßen Wellenlagers gezeigt. Jedes der Wellenlager aus den Ausführungsbeispielen ist als Kardanwellenlager für ein Kraftfahrzeug ausgeführt. Die gezeigten Wellenlager umfassen jeweils ein Wälzlager 1, das in diesen Ausführungsbeispielen als gedichtetes Rillenkugellager ausgebildet ist. Das Wälzlager 1 umfasst einen Außenring 2 und einen Innenring 13, wobei der Außenring 2 und der Innenring 13 durch Wälzkörper 14, die üblicherweise in einem Käfig aufgenommen sind, aufeinander abgestützt sind. Der erste Federkörper 5 ist in den hier gezeigten Ausführungsbeispielen, im Längsschnitt betrachtet, durch eine umfangsseitig umlaufende, axial in Richtung des Schwingungstilgers 6 offene, V-förmige Falte gebildet, wobei der erste Federkörper 5 aus einem gummielastischen, elastomeren Werkstoff besteht. Radial außenseitig weist der erste Federkörper 5 einen Stützring 15 auf, der vollständig vom elastomeren Werkstoff des ersten Federkörpers 5 umschlossen ist, wobei der Stützring 15 eine vereinfachte Festlegung des ersten Federkörpers 5 am Haltering 3 bewirkt. Am Außenumfang des Außenrings 2 ist der erste Federkörper 5 direkt anvulkanisiert oder eingeclipst.

Durch die V-förmige Falte des ersten Federkörpers 5 kann das Wälzlager 1, bezogen auf den Haltering 3, sowohl in radialer als auch in axialer Richtung ausgelenkt werden, ohne dass innerhalb des ersten Federkörpers 5 gebrauchsdauerverringernde Zug- und/oder Schubspannungen entstehen. Der erste Federkörper 5 weist dadurch gleichbleibend gute Gebrauchseigenschaften während einer langen Gebrauchsdauer auf.

In beiden Ausführungsbeispielen ist der Außenring 2 relativ unverdrehbar mit dem Schwingungstilger 6 verbunden, wobei die Schwungmasse 9 des Schwingungstilgers 6 im Wesentlichen nur in radialer Richtung schwingfähig ist.

In Figur 1 bildet der Schwingungstilger 6 eine separat erzeugte, vormontierbare Einheit 10, die aus dem Tragkörper 7, dem zweiten Federkörper 8 und der Schwungmasse 9 besteht. Diese vormontierbare Einheit 10 ist auf den Außenumfang des Außenrings 2 aufgepresst und dadurch drehfest an diesem festgelegt.

In Figur 2 ist der Tragkörper 7 des Schwingungstilgers 6 demgegenüber durch den Außenring 2 des Wälzlagers 1 gebildet, so dass das Wellenlager insgesamt einen teilearmen Aufbau aufweist. Außerdem ist der zweite Federkörper 8 einstückig ineinander übergehend mit dem ersten Federkörper 5 ausgebildet, wobei der zweite Federkörper 8 und der erste Federkörper 5 aus demselben elastomeren Werkstoff bestehen. Durch den teilearmen Aufbau des in Figur 2 gezeigten Wellenlagers ist dieses vergleichsweise einfach und kostengünstig herstellbar und weist nur eine geringe Masse auf.

Sowohl in Ausführungsbeispiel Figur 1 als auch in Ausführungsbeispiel Figur 2 ist die Schwungmasse 9 zweiteilig ausgebildet. Die Schwungmasse 9 besteht aus dem Stützkörper 11 und der Trägheitsmasse 12, die zerstörungsfrei lösbar und austauschbar miteinander verbunden sind. Die Austauschbarkeit ist durch die Befestigungsmittel 16 sichergestellt, die einen Bestandteil der Schwungmasse 9 bilden und in diesem Ausführungsbeispiel als Schrauben ausgeführt sind. Die Schrauben sind gleichmäßig in Umfangsrichtung verteilt angeordnet.

Ist beispielsweise nur eine sehr kleine Schwungmasse 9 gefordert, besteht die Möglichkeit, sowohl die Trägheitsmasse 12 als auch die Befestigungsmittel 16 zu entfernen, so dass nur noch der vergleichsweise leichte Stützkörper 11 als Schwungmasse fungiert. Ist demgegenüber eine relativ vergrößerte Schwungmasse 9 erforderlich, können unterschiedlich schwere Trägheitsmassen 12 mit dem Stützkörper 11 verbunden werden, so dass beispielsweise auch dann, wenn das Wellenlager wie in Figur 2 ausgeführt ist und der Tragkörper 7 durch den Außenring 2 gebildet ist und die beiden Federkörper 5, 8 einstückig ausgeführt sind, die Gebrauchseigenschaften des Schwingungstilgers an den jeweiligen Anwendungsfall einfach anpassbar sind. Ein und dasselbe Wellenlager, mit Ausnahme der unterschiedlich schweren Schwungmassen 9, können dann für verschiedene Anwendungsfälle zum Einsatz kommen.

## Patentansprüche

1. Wellenlager, umfassend ein Wälzlager mit einem Außenring, der außenumfangsseitig von einem Haltering mit radialem Abstand umschlossen ist, wobei in dem durch den Abstand gebildeten Spalt zumindest ein in axialer und radialer Richtung elastisch nachgiebiger erster Federkörper angeordnet ist, **dadurch gekennzeichnet, dass** der Außenring (2) relativ unverdrehbar mit einem Schwingungstilger (6) verbunden ist.

2. Wellenlager nach Anspruch 1, **dadurch gekennzeichnet, dass** der Schwingungstilger (6) einen Tragkörper (7), einen zweiten Federkörper (8) und eine im Wesentlichen nur in radialer Richtung schwingfähige Schwungmasse (9) aufweist.

3. Wellenlager nach einem der Ansprüche 1 oder 2, **dadurch gekennzeichnet, dass** der erste (5) und/oder zweite Federkörper (8) aus elastomerem Werkstoff bestehen.

4. Wellenlager nach einem der Ansprüche 1 bis 3, **dadurch gekennzeichnet, dass** der Schwingungstilger (6) eine separat erzeugte, vormontierbare Einheit (10) bildet, die am Außenring (2) festgelegt ist.

5. Wellenlager nach einem der Ansprüche 1 bis 3, **dadurch gekennzeichnet, dass** der Tragkörper (7) durch den Außenring (2) gebildet ist.

6. Wellenlager nach Anspruch 5, **dadurch gekennzeichnet, dass** der zweite Federkörper (8) einstückig ineinander übergehend und materialeinheitlich mit dem ersten Federkörper (5) ausgebildet ist und aus elastomerem Werkstoff besteht.

7. Wellenlager nach einem der Ansprüche 1 bis 6, **dadurch gekennzeichnet, dass** die Schwungmasse (9) durch einen Stützkörper (11) und eine zerstörungsfrei lösbar und austauschbar mit dem Stützkörper (11) verbundene Trägheitsmasse (12) gebildet ist.
